# EUROPÄISCHE PATENTSCHRIFT

(11) **EP 0 930 432 B1**
(45) Veröffentlichungstag und Bekanntmachung des Hinweises auf die Patenterteilung: **21.04.2004**
(21) Anmeldenummer: 98120883.8
(22) Anmeldetag: 04.11.1998
(51) Int. Cl.: F03B 3/12

(54) **Laufrad für eine hydraulische Strömungsmaschine nach Francis-Bauart**
Rotor blade form for Francis water turbine
Forme d'une aube du rotor de turbine hydraulique du type Francis

(30) Priorität: 20.01.1998 DE 19801849
(43) Veröffentlichungstag der Anmeldung: 21.07.1999
(73) Patentinhaber: Voith Siemens Hydro Power Generation GmbH & Co. KG, 89522 Heidenheim (DE)
(72) Erfinder: Neidhardt, Thomas, 89522 Heidenheim (DE)
(74) Vertreter: Dr. Weitzel & Partner

(56) Entgegenhaltungen:
- DE-C- 322 233
- DE-C- 323 190

## Beschreibung

Die Erfindung betrifft ein Laufrad für eine hydraulische Strömungsmaschine nach Francis-Bauart, insbesondere für eine Wasserturbine, Pumpturbine oder Pumpe, umfassend ein Gehäuse, das das Laufrad umschließt sowie entsprechende Anschlüsse für den Wasserzufluß und Abfluß. Eine solche Maschine umfaßt weiterhin im allgemeinen einen Leitapparat, der zahlreiche Schaufeln aufweist, und der dem Laufrad oder einem weiteren Leitrad voroder nachgeschaufelt ist. Als Beispiel wird auf US-A-4 496 282 verwiesen.

DE-C-323 190 sowie DE-C-322 233 beschreiben jeweils eine hydraulische Strömungsmaschine nach Francis -Bauart gemäß dem Oberbegriff von Anspruch 1.

Das Laufrad einer solchen Maschine unterliegt beim Betrieb hohen Beanspruchungen durch die einwirkenden Kräfte. Dies betrifft insbesondere die Anschlußstellen zwischen den Schaufeln einerseits und dem Laufradboden sowie dem Laufradkranz andererseits. Besonders große Spannungsspitzen treten im Übergangsbereich zwischen Schaufel und Laufradboden auf. Dies kann bei extremen Belastungen zu Rissen an den genannten Stellen führen.

Die üblicherweise getroffenen Maßnahmen hatten nur begrenzten Erfolg. So hat man beispielsweise die Schaufeldicke partiell oder insgesamt vergrößert. Es traten dennoch Risse auf. Außerdem wird hierdurch von der hydraulisch optimalen Gestaltung abgewichen.

Der Erfindung liegt die Aufgabe zugrunde, das Laufrad einer Strömungsmaschine, nach Francis-Bauart, derart zu gestalten, daß eine für die Lebensdauer der Maschine ausreichende Festigkeit an den genannten neuralgischen Stellen gewährleistet ist, ohne daß die strömungstechnisch optimale Gestaltung hierdurch beeinträchtigt wird, und daß der hierzu notwendige Aufwand möglichst gering ist. So soll u.a. die Schaufel möglichst dünn gestaltet werden können.

Diese Aufgabe wird durch die Merkmale von Anspruch 1 gelöst.

Demgemäß wird die einzelne Schaufel im Bereich der Austrittskante und zugleich im Bereich ihres Anschlusses an den Laufradboden durch ein kleines Flächenelement in stromabwärtiger Richtung vergrößert. Die Austrittskante der Schaufel, die normalerweise einen kontinuierlichen Verlauf aufweist, weist somit in einem gewissen Abstand vom Laufradboden eine Umlenkung auf, so daß der Endpunkt der Austrittskante im Bereich des Laufradbodens weiter stromabwärts liegt als dies normalerweise der Fall wäre.

Das Entlastungselement übernimmt dabei die Aufgabe einer Umorientierung der Steifigkeit in der Schaufel, derart, daß die maximal auftretende Strukturspannung aus dem kerbempfindlichen Anschlußbereich auf einen großflächigen Bereich des Entlastungselementes verlagert wird, bei gleichzeitiger Absenkung des Spannungsniveaus.

Damit hat der Erfinder eine höchst einfache Maßnahme angegeben.
Das genannte Flächenelement braucht nicht dicker zu sein als die Schaufel im übrigen Austrittskantenbereich.

Was für den Übergang zwischen Schaufel und Laufradboden gilt, kann auch beim Übergang zwischen Schaufel und Laufradkranz angewandt werden. Jedoch sind die Spannungen im Übergangsbereich zum Laufradboden im allgemeinen größer und gefährlicher, so daß die erfindungsgemäße Maßnahme dort wichtiger ist.

Die Erfindung ist anhand der Zeichnung näher erläutert. Darin ist im einzelnen folgendes dargestellt:
- Fig. 1: zeigt eine Francis-Turbine in einem Axialschnitt.
- Fig. 2: zeigt in einem Meridianschnitt einen Ausschnitt aus einem Laufrad einer Francis-Turbine.
- Fig. 3: zeigt den Gegenstand von Figur 1 in vergrößerter Darstellung.

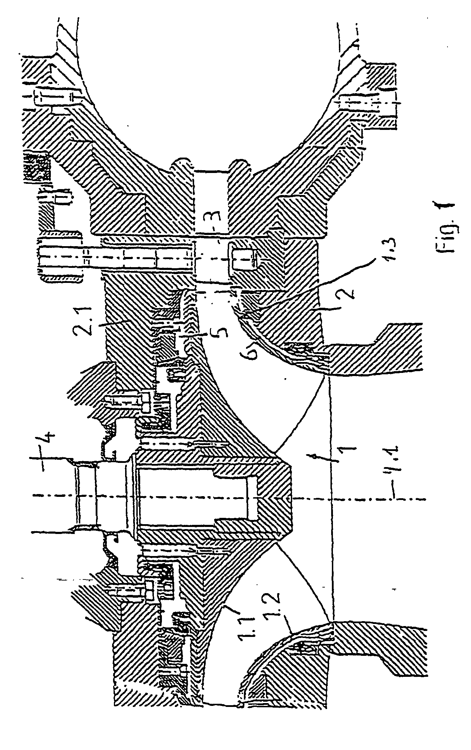

Die in Fig. 1 gezeigte Francis-Turbine weist als Hauptelemente ein Laufrad 1 auf, ein Gehäuse 2, einen Leitapparat 3 und eine Welle 4.

Das Laufrad umfaßt einen Laufradboden 1.1, einen Laufradkranz 1.2 sowie eine Vielzahl von Schaufeln 1.3. Zwischen dem sogenannten Turbinendeckel 2.1 und dem Laufradboden 1.1 befindet sich ein Radseitenraum 5, und zwischen dem Laufradkranz 1.2 und dem Gehäuse 2 befindet sich ein Radseitenraum 6.

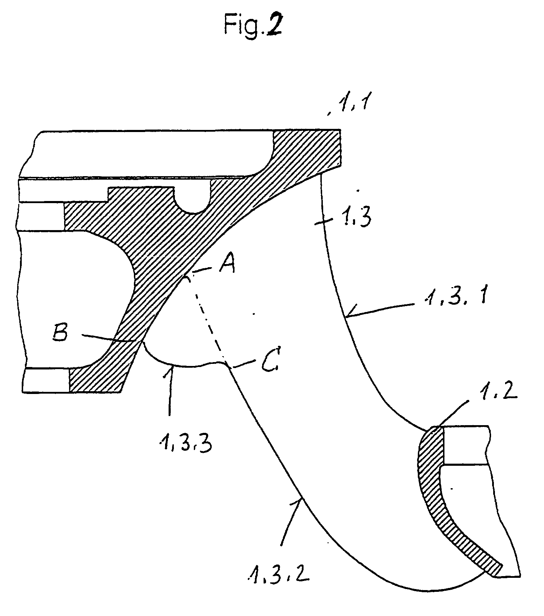

Aus Fig. 2 erkennt man wiederum den Laufradboden 1.1 einer Francis-Turbine, den Laufradkranz 1.2 sowie eine Schaufel 1.3.

Die Schaufel 1.3 weist eine Eintrittskante 1.3.1 und eine Austrittskante 1.3.2 auf.

Wie man ferner sieht, weist die Schaufel 1.3.2 nicht weit vom Laufradboden 1.1 eine Umlenkung auf. Der Verlauf der Austrittskante 1.3.2 bei einer herkömmlichen Schaufel ist gestrichelt dargestellt. Aufgrund des erfindungsgemäßen Verlaufes von Austrittskante 1.3.2 weist die Schaufel 1.3.1 gemäß der Erfindung gegenüber herkömmlichen Schaufeln ein zusätzliches Schaufelelement 1.3.1 auf, das deutlich größer als ein üblicher bogenförmiger Übergang ist. Im vorliegenden Falle ist das Schaufelelement 1.3.1 im wesentlichen dreieckig.

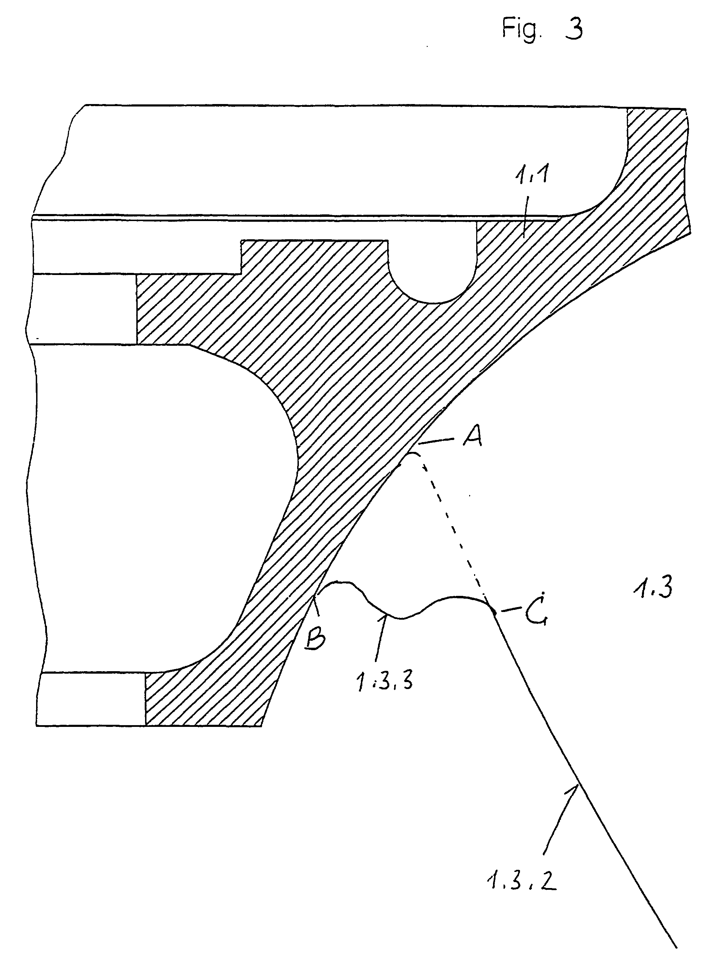

Fig. 3 läßt die Verhältnisse im einzelnen erkennen. Wie man sieht, trifft der gestrichelt dargestellte Teil der Austrittskante 1.3.2 - so wie bei konventionellen Schaufeln - bei Punkt A auf den Laufradboden 1.1. Bei dem erfindungsgemäßen Verlauf hingegen trifft die Austrittskante 3.2 bei Punkt B auf den Laufradboden 1.1. Der Auftreffpunkt B liegt somit bei einer erfindungsgemäßen Schaufel gegenüber dem Auftreffpunkt A bei einer konventionellen Schaufel stromabwärts.

Im einzelnen ist der Verlauf wie folgt, in Richtung auf den Laufradboden 1.1 gesehen: Zunächst erfolgt eine erste Ausrundung, ausgehend vom weitgehend geradlinigen Austrittskantenverlauf. Diese erste Ausrundung geht über in eine konvexe Krümmung. Sodann folgt eine weitere Ausrundung, die bei Punkt B sanft in die innere Kontur des Laufradbodens 1.1 einmündet.

Abweichend hiervon kann der erfindungsgemäße Austrittskantenverlauf 1.3.3 auch geradlinig sein. Femer kann er generell, d.h. auf dem größten Teil seiner Erstreckung, auch leicht konkav verlaufen.

Das erfindungsgemäße zusätzliche Schaufelelement 1.3.1 kann mit der Schaufel 1.3 einteilig sein. Dies wird insbesondere dann der Fall sein, wenn das gesamte Laufrad im Gießverfahren hergestellt wird. Es kann aber auch angestückt werden. Es kann dieselbe Dicke haben wie der übrige Austrittskantenbereich 1.3.2. Es kann aber auch eine hiervon abweichende Dicke haben. Femer kann es gegenüber dem Hauptteil der Schaufel 1.3 geneigt sein, so daß eine gewisse Umlenkung der Strömung in der einen oder anderen Richtung erfolgt.

Die Lage des Punktes C, bei welchem der erfindungsgemäße Längenabschnitt 1.3.3 seinen Ausgang nimmt, kann ebenfalls von Fall zu Fall unterschiedlich sein. So kann der Abstand zwischen Punkt A und C 0,1 bis 0,3 der Gesamtlänge der Austrittsschaufelkante 1.3.2 betragen. Das Maß 0,2 hat sich als besonders vorteilhaft erwiesen. Abweichungen von dem genannten Bereich nach oben und nach unten sind ebenfalls möglich.

Die bisherigen Erfahrungen zeigen, daß das Maß A - C wie auch das Maß B - C wenigstens 5% der in Strömungsrichtung gemessenen Schaufellänge betragen sollte. Nicht auszuschließen ist jedoch, daß auch ein noch geringeres Maß eine Verbesserung im Sinne der Lösung der gestellten Aufgabe bringt.

## Patentansprüche

1. Laufrad für eine hydraulische Strömungsmaschine nach Fancis-Bauart, insbesondere für eine Wasserturbine;
mit einem Laufradboden (1.1), einem Laufradkranz (1.2) sowie einer Vielzahl von Schaufeln (1.3);
jede Schaufel (1.3) weist eine Eintrittskante (1.3.1) und eine Austrittskante (1.3.2) auf;
die Austrittskante (1.3.2) einer jeden Schaufel (1.3) ist an einem Punkt (C) im Bereich des Laufradbodens (1.1) derart umgelenkt, daß der weitere Verlauf (1.3.3) der Austrittskante (1.3.2) auf den Laufradboden (1.1) an einem Punkt (B) auftritt, der gegenüber einem sich ohne Umlenkung der Austrittskante (1.3.2) ergebenden Auftreffpunkt (A) stromabwärts liegt,
**gekennzeichnet durch** die folgenden Merkmale:
der zwischen Umlenkpunkt (C) und Auftreffpunkt (B) liegende Längenabschnitt (1.3.3) der Austrittskante (1.3.2) ist geradlinig oder konvex.

2. Laufrad nach Anspruch 1, **dadurch gekennzeichnet, daß** der Längenabschnitt zwischen den Punkten A und B wenigstens 3 % des Längenabschnittes der Schaufel am Laufradboden zwischen Eintrittskante und Punkt A ist.

3. Laufrad nach Anspruch 2, **dadurch gekennzeichnet, daß** der Längenabschnitt zwischen den Punkten A und B wenigstens 5 % des Längenabschnittes der Schaufel am Laufradboden zwischen Eintrittskante und Punkt A ist.

4. Laufrad nach einem der Ansprüche 1 bis 3, **dadurch gekennzeichnet, daß** der Abstand zwischen den Punkten A und C wenigstens 3 % des Längenabschnittes der Schaufel am Laufradboden zwischen Eintrittskante und Punkt A beträgt.

5. Laufrad nach einem der Ansprüche 1 bis 4, **dadurch gekennzeichnet, daß** der Abstand zwischen den Punkten A und C wenigstens 5 % des Längenabschnittes der Schaufel am Laufradboden zwischen Eintrittskante und Punkt A beträgt.

6. Hydrodynamische Strömungsmaschine nach Francis-Bauart, **gekennzeichnet durch** ein Laufrad gemäß einem der Ansprüche 1 bis 5.

## Claims

1. A blade wheel for a hydraulic fluid flow engine of Francis design, especially for a water turbine;
with a blade wheel base (1.1), a blade wheel rim (1.2) as well as a plurality of blades (1.3);
with each blade (1.3) having an inlet edge (1.3.1) and an outlet edge (1.3.2);
with the outlet edge (1.3.2) of each blade (1.3) being deflected at a point (C) in the region of the blade wheel base (1.1) in such a way that the further progress (1.3.3) of the outlet edge (1.3.2) meets the blade wheel base (1.1) at a point (B) which is downstream relative to a meeting point (A) arising without deflection of the outlet edge (1.3.2),
**characterized by** the following features:
the length section (1.3.3) of the outlet edge (1.3.2) situated between the deflection point (C) and the meeting point (B) is straight or convex.

2. A blade wheel as claimed in claim 1, **characterized in that** the length section between the points A and B is at least 3% of the length section of the blades on the blade wheel base between the inlet edge and point A.

3. A blade wheel as claimed in claim 2, **characterized in that** the length section between the points A and B is at least 5% of the length section of the blade at the blade wheel base between the inlet edge and point A.

4. A blade wheel as claimed in one of the claims 1 to 3, **characterized in that** the distance between the points A and C is at least 3% of the length section of the blade on the blade wheel base between the inlet edge and point A.

5. A blade wheel as claimed in one of the claims 1 to 4, **characterized in that** the distance between the points A and C is at least 5% of the length section of the blade on the blade wheel base between the inlet edge and point A.

6. A hydrodynamic fluid flow machine of Francis design, **characterized by** a blade wheel as claimed in one of the claims 1 to 5.

## Revendications

1. Roue mobile pour turbomachine hydraulique du type Francis,
notamment pour une turbine hydraulique ;
avec un fond de roue (1.1), une couronne de roue (1.2) ainsi qu'une pluralité d'aubes (1.3) ;
chaque aube (1.3) comporte un bord d'entrée (1.3.1) et un bord de sortie (1.3.2) ;
le bord de sortie (1.3.2) de chacune des aubes (1.3) est dévié en un point (C) situé dans la région du fond de roue (1.1) de telle façon que le bord de sortie (1.3.2) restant (1.3.3) rejoint le fond de roue (1.1) en un point (B) situé en regard et en aval d'un point (A) qui formerait le point de rencontre si le bord de sortie (1.3.2) ne subissait pas de déviation,
**caractérisée par** les caractéristiques suivantes :
le segment de longueur (1.3.3) du bord de sortie (1.3.2) compris entre le point de déviation (C) et le point de rencontre (B) est rectiligne ou convexe.

2. Roue mobile selon la revendication 1, **caractérisée en ce que** le segment de longueur entre les points A et B correspond à au moins 3 % du segment de longueur de l'aube compris entre le bord d'entrée et le point A dans le fond de la roue mobile.

3. Roue mobile selon la revendication 2, **caractérisée en ce que** le segment de longueur entre les points A et B correspond à au moins 5 % du segment de longueur de l'aube compris entre le bord d'entrée et le point A dans le fond de la roue mobile.

4. Roue mobile selon l'une quelconque des revendications 1 à 3, **caractérisée en ce que** la distance entre les points A et C correspond à au moins 3 % du segment de longueur de l'aube compris entre le bord d'entrée et le point A dans le fond de la roue mobile.

5. Roue mobile selon l'une quelconque des revendications 1 à 4, **caractérisée en ce que** la distance entre les points A et C correspond à au moins 5 % du segment de longueur de l'aube compris entre le bord d'entrée et le point A dans le fond de la roue mobile.

6. Turbomachine hydrodynamique du type Francis, **caractérisée par** une roue mobile selon l'une quelconque des revendications 1 à 5.
